# EUROPEAN PATENT SPECIFICATION

(11) **EP 2 532 567 B1**
(45) Date of publication and mention of the grant of the patent: **29.10.2014**
(21) Application number: 11168876.8
(22) Date of filing: 07.06.2011
(51) Int. Cl.: B62D 21/02, B62D 21/09, B62D 49/00, B60K 1/04

(54) **Frame structure of a tractor vehicle**
Rahmenstruktur eines Traktors
Structure de cadre d'un véhicule tracteur

(43) Date of publication of application: 12.12.2012
(73) Proprietor: IVECO MAGIRUS AG, 89079 Ulm (DE)
(72) Inventor: Duncker, Benjamin, 47800 Krefeld (DE)
(74) Representative: Cinquantini, Bruno

(56) References cited:
- EP-A2- 0 963 901
- WO-A1-95/10442
- WO-A1-2005/012065

## Description

The present invention relates to the frame structure of a tractor vehicle, according to the preamble of claim 1. A similar frame structure is disclosed in EP 0 963 901 A2.
Tractor vehicles of the present kind are in particular vehicles with a fifth wheel coupling for engaging the trailer at their rear end. The fifth wheel coupling is supported by longitudinal profile members that delimit the frame laterally and extend towards the rear end of the vehicle spaced apart from each other. These longitudinal profile members are common steel profiles with a vertical web and an upper and a lower flange that are drawn in towards the inner side of the frame.

Because of the large length of the trailer truck, the fifth wheel coupling must allow a slight inclination of the tractor vehicle with respect to the trailer so that all vehicle axes and tires keep ground contact while the truck overruns a ramp or an obstacle. Because of this reason the fifth wheel coupling is movably supported, and the rear end of the vehicle is declined downwards with respect to the horizontal plane. In a corresponding manner the upper rims of the longitudinal profile members are slightly inclined downwards in the direction of the vehicle end, i. e. the upper sides of the longitudinal profile members change towards the rear end of the vehicle from a horizontal section into a downwardly declined end section.

The transition of the longitudinal profile members from the horizontal section to the tilted end section leads to a problem in manufacturing the longitudinal profile members that are commonly produced in a rolling process. In this case a compressive deformation occurs at the transition point from the horizontal section to the end section, leading to cracks or breakages. Another problem of this frame construction lies in the fact that the upper flanges extending to the inner side of the frame affect the access to the space between the longitudinal profile members adversely, and they decrease the space for mounting vehicle components therebetween, for example, a battery box. Still another problem occurs with longitudinal profile members that have a C-shaped cross-section, comprising not only an upper flange but also a drawn-in lower flange, both flanges extending to the vehicle end. Because of the inclination of the end section of the upper side of the profile members, both flanges converge towards the end of the profile member. This complicates a subsequent insertion of an additional construction element between the profile members from the rear end of the vehicle, for example, a traverse member for connecting the rear ends of the profile members. Consequently the shape of the profile member determines a mounting order, which may be undesired for certain reasons.

It is therefore an object of the present invention to provide a frame structure of a tractor vehicle, especially for a truck vehicle of the above kind, with longitudinal profile members that can be produced in a rolling process without any problems, providing an enlarged mounting space between the profile members in the rear area of the vehicle that is easily accessible. Moreover, the frame structure of the present invention shall offer a greater freedom in the mounting order of its components as it is the case with the known frame structures according to the state of the art.

These objects are achieved by a frame structure comprising the features of claim 1.

According to the present invention, the drawn-in upper flanges of the longitudinal profile members are cut out or cut off at least at the transition from the horizontal section to the tilted end section. This means that at the transition point no upper flange is present, and compressive deformations of the longitudinal profile members during the manufacturing process can be avoided. Moreover, a cut out in the upper flange improves the accessibility of the mounting space between the profile members so that an additional vehicle component as a battery box, for example, can be mounted between the profile members without any problems. In case the drawn-in upper flanges are completely omitted in the end section, it is possible to insert other construction elements afterwards, for example a traverse member for completing the frame end. The stability of the longitudinal profile members at their upper sides is provided by the reinforcement profiles that are flanged to the longitudinal profile members at their outer sides and extend over the whole length of the profiles.

According to a preferred embodiment of the present invention, the upper flanges end in front of the transition from the horizontal section into the end section so that they are not present in the end section.

According to another preferred embodiment the reinforcement profiles are provided with an L-shaped cross-section. This construction comprises a vertical web that is flanged to the respective web of the longitudinal profile member laterally, as well as an upper flange that stands in a right angle with respect to the web and extends outwardly.

More preferably the longitudinal profile members comprise a lower flange extending to the inner side of the frame and reinforce the longitudinal profile member at least at the transition from the horizontal section of its upper side into the declined end section. This lower flange can extend along the whole length of the longitudinal profile member, providing a sufficient rigidity over the complete length of the frame.

According to still another embodiment of the present invention, the longitudinal profile members are connected at the rear end of the vehicle by a traverse member that is inserted between the ends of the profile members, said traverse member comprising a vertical web and an upper this flange.

In the following preferred embodiments of the invention are described with respect to the enclosed figures.
- Fig. 1: is a perspective view of a first embodiment of a frame structure of a tractor vehicle according to the present invention;
- Fig. 2: is an exploded view of the frame structure of Fig. 1;
- Fig. 3: shows the present embodiment of the frame structure according to the present invention in a perspective according to Fig. 1, with some additional components;
- Fig. 4: is a side view of the embodiment of the frame structure according to the present invention of Fig. 3; and
- Fig. 5: is a perspective view of still another embodiment of the frame structure according to the present invention in a perspective corresponding to Fig. 3.

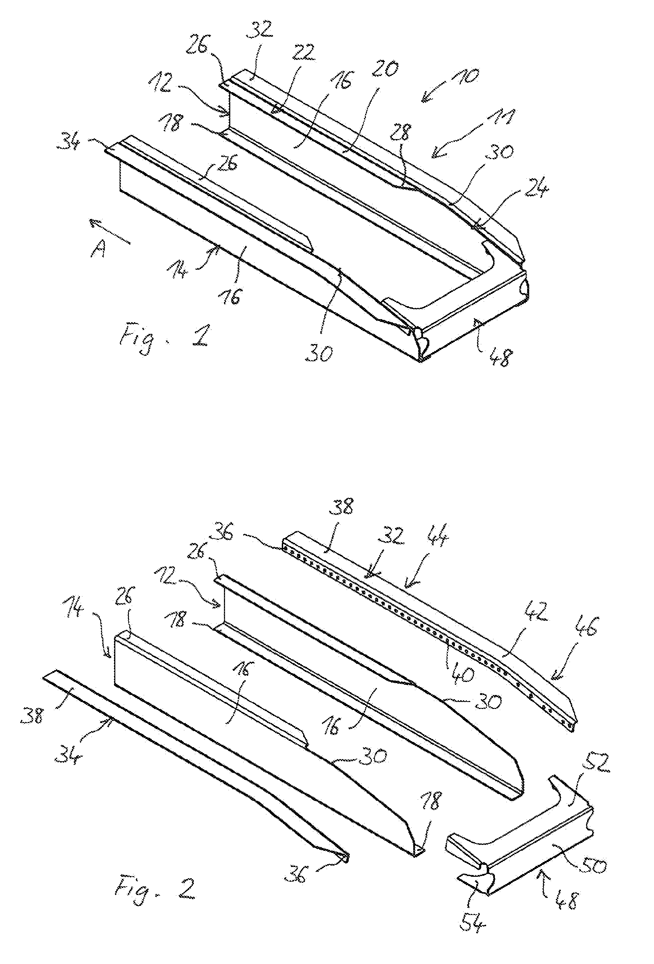

Fig. 1 is a perspective view of the rear end of a vehicle frame 10 that comprises a frame structure 11 according to the present invention, as will be explained in the following. In particular this frame structure 11 is part of a tractor vehicle. Vehicle components that do not belong to this frame structure 11 are omitted in Fig. 1 for the sake of simplicity. The driving direction of the vehicle is marked by an arrow A in Fig. 1. In this direction A the vehicle frame 10 continues, i. e. the frame structure 11 comprises only a portion of the vehicle frame 10 at the rear end of the vehicle that is disposed in the front of the right side of Fig. 1.

The present frame structure 11 comprises a pair of longitudinal profile members, namely a left profile member 12 and a right profile member 14 that are spaced in parallel to each other and extend to the rear end of the vehicle. Each of these longitudinal profile members 12,14 comprises a vertical web 16 and a lower drawn-in flange 18 that extends horizontally from the web 16 to the inner side of the frame 10 and extends over the complete length of the respective longitudinal profile member 12,14. The lower rim of the longitudinal profile member 12,14 lies together with the lower drawn-in flange 18 in a horizontal plane over the road surface on which the vehicle is located. Here and in the complete application, the term "horizontal" shall denote a plane along which the frame 10 of the vehicle extends and that is arranged parallel over the flat road surface.

The upper sides 20 of the longitudinal profile members 12,14 are located in a horizontal plane in a front section 22, i. e. parallel to their lower sides that are formed by the drawn-in lower flanges 18. Towards the rear end of the vehicle, the upper sides 20 change into a slightly declined end section 24, that is inclined about 11 degrees downwards with respect to the horizontal plane. These declined end sections 24 provide that the upper sides 20 and the flat bottom sides of the longitudinal profile members 12,14 converge towards the rear end of the vehicle, and the webs 16 taper in this direction.

Upper drawn-in flanges 26 extend along the upper sides 20 of the longitudinal profile members 12,14 from the front portion of the vehicle in the direction of its rear end up to a point 28 that is located still in front of the transition 30 from the horizontal section 22 to the end section 24. This transition 30 is marked by a slight bend or buckling of the topside 20. At the transition 30, no upper flange 26 is present, as well as in the following end section 24. This means that the frame structure 11 comprises a C-shaped section in its front horizontal section 22 that changes into an L-shaped section before the transition 30 into the end section 24.

The change of this profile can also be taken from Fig. 2. In the horizontal section 22 the topsides 20 of the longitudinal profile members 12,14 are formed by the upper flanges 26 that span a horizontal plane, adjacent to a tilted plane declined in a downward direction and being spanned by the inclined top rims of the longitudinal profile members 12,14. In the horizontal plane or above it, the fifth wheel coupling for receiving the trailer is disposed.

According to Fig. 1 and 2, the longitudinal profile members 12,14 are reinforced at their outer sides by reinforcement profiles 32,34 comprising an L-shaped cross-section, with a vertical web 36 (Fig. 2) and a horizontal flange 38 at the top rim of the vertical web 36. The web 36 comprises a plurality of holes 40 that make it possible to flange the web 36 to the lateral outer side of the respective web 16 of the longitudinal profile member 12,14. The flange 38 of the reinforcement profile 32,34 lies in its mounting position in Fig. 1 at the same height or slightly higher than the upper side 20 of the longitudinal profile member 12,14 and follows its progression, i. e. the corresponding reinforcement member 32,34 also comprises a transition 42 from a front horizontal section 44 into a downwardly declined end section 46. In front of the transition 30, the flange 38 lies parallel to the horizontal plane of the flange 26 of the longitudinal profile member 12,14. Towards the rear end of the vehicle, the flange 38 of the reinforcement profile 32,34 extends much further than the flange 26 of the longitudinal profile members 12,14, namely up to the end of the respective reinforcement profile 32,34 and the longitudinal profile members 12,14. For this reason the reinforcement profiles 32,34 also reinforce the top rim of the longitudinal profile members 12,14 also in the end section 24 so that the profile members can support greater loads without being deformed.

Because the drawn-in upper flanges 26 of the longitudinal profile members 12,14 are missing at the rear end of the vehicle, an insertion of a traverse member 48 is possible from the rear side between the webs 16 of the profile members 12,14. Such an insertion would be difficult or impossible in case the drawn-in upper flanges 26 would extend to the rear ends of the longitudinal profile members 12,14, as it is the case in the state of the art. In this embodiment, only the lower flanges 18 are present at the rear ends of the longitudinal profile members 12,14 so that the traverse member 48 is supported by them. The traverse member 48 itself is an angular profile with a C-shaped cross-section, comprising a vertical web 50, an upper flange 52 angled from this web 50 and extending in the driving direction A, as well as a lower flange 54. The drawn-in lower flange 18 does not only reinforce the longitudinal profile members 12,14 at the transition 30 but also provides a support for the traverse member 48.

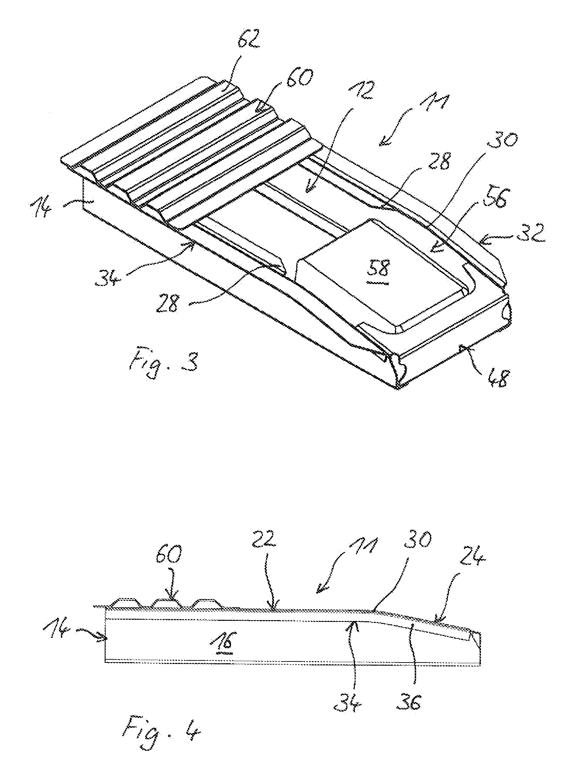

The traverse member 48 and the rear ends 28 of the upper flanges 26 delimit a cut-out portion 56 between the longitudinal profile members 12,14 in which a vehicle component like, for example, a battery box 58 can be inserted into the frame 10, as it is shown in Fig. 3. In this cut-out portion 56, the lateral cut out at the inner sides of the longitudinal profile members 12,14 extend the access to the mounting space between the longitudinal profile members 12,14 that is delimited by the drawn-in flanges 26 in the state of the art. In their horizontal front section 22, the upper sides 20 of the longitudinal profile members 12,14 are covered by a mounting plate 60 that covers the space between the longitudinal profile members 12,14 and comprises a profile sheet 62, that can be seen in the side view in Fig. 4. This mounting plate 60 supports the fifth wheel coupling member (not shown) and is mounted directly on the top sides of the reinforcement profiles 32,34.

Fig. 4 also shows the transition 30 from the horizontal section 22 of the upper side 20 of the longitudinal profile members 12,14 to the declined end section 24. Moreover, it can be seen how the lateral reinforcement member 34 follows the shape of the upper side 20.

It is noted that the declination of the end section 24 with respect to the horizontal section 22 is not limited to the mentioned value of 11 degrees. It is rather possible in the scope of the present invention to choose any other declination. A declination of 11 degrees, however, corresponds to the declination of the upper shape of the rear end of the vehicle according to certain construction standards.

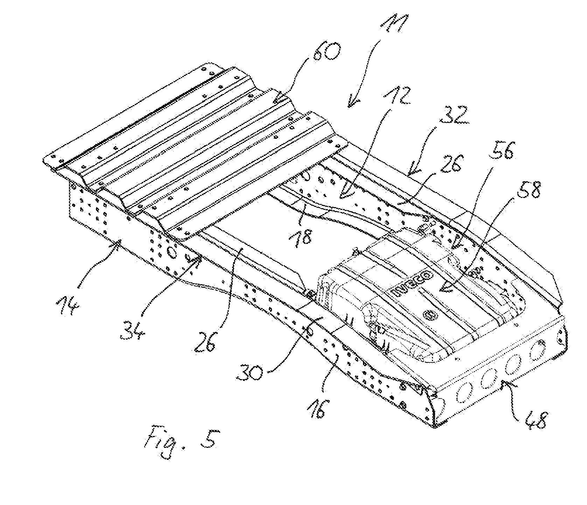

Fig. 5 shows an embodiment of the frame structure 11 according to the present invention that is similar to that of Fig. 3. It can also been taken from this figure how the reinforcement profiles 32,34 are flanged to the webs 16 of the longitudinal profile members 12,14. A difference lies in the fact that the drawn-in lower flange 18 comprises a slight bulge in an upward direction so that the webs 16 are slightly waisted in the portion around the transition 30. However, the shape of the upper sides 20 of the longitudinal profile members 12,14 is the same as in the preceding embodiment, as well as the shape of the drawn-in upper flanges 26 that end before the transition 30.

## Claims

1. Frame structure (11) of a tractor vehicle, comprising a pair of longitudinal profile members (12,14) delimiting the frame (10) laterally and extending towards the rear end of the vehicle spaced apart from each other, said longitudinal profile members (12,14) each comprising a vertical web (16) and an upper flange (26) extending from the web (16) towards the inside of the frame (10), the upper sides (20) of the longitudinal profile members (12,14) each comprising a horizontal section (22), followed by a downwardly declined end section (24) at the rear end of the vehicle, **characterized in that** the upper flanges (26) are cut out or cut off at their rear ends (28) at a point located still in front of the transition (30) from the horizontal section (22) to the downwardly inclined end section (24), and that the longitudinal profile members (12,14) are reinforced laterally by reinforcement profiles (32,34) that are flanged to the outer sides of the longitudinal profile members (12,14) and extend along their upper rims towards the rear end of the vehicle,
wherein the longitudinal profile members (12,14) are connected at the rear end of the vehicle by a traverse member (48) inserted between the rear ends of the longitudinal profile members (12,14) and being provided as angular profiles with a vertical web (50) and an upper flange (52), the transverse member (48) and the rear ends (28) of the upper flanges (26) of the longitudinal profile members (12, 14) delimiting a cut-out portion (56) between the longitudinal profile members (12, 14).

2. Frame structure according to claim 1, **characterized in that** the upper flanges (26) end before the transition (30) from the horizontal section (22) to the declined end section (24) so that they are not present in the end section (24).

3. Frame structure according to one of claims 1 or 2, **characterized in that** the reinforcement profiles (32,34) are provided with an L-shaped cross-section.

4. Frame structure according to one of the preceding claims, **characterized in that** the longitudinal profile members (12,14) comprise a lower flange (18) extending to the inner side of the frame (10), reinforcing the longitudinal profile members (12,14) at least at the transition (30) from the horizontal section (22) to the end section (24).

## Patentansprüche

1. Rahmen-Struktur (11) eines Traktor-Fahrzeugs, umfassend ein Paar Längs-Profil-Elemente (12, 14), die den Rahmen (10) seitlich begrenzen und sich in Richtung auf das hintere Ende des Fahrzeugs räumlich beabstandet voneinander erstrecken, wobei die Längs-Profil-Elemente (12, 14) jeweils eine vertikale Rippe (16) und eine obere Wange (26) umfassen, die sich von der Rippe (16) in Richtung auf die Innenseite des Rahmens (10) erstreckt, wobei die oberen Seiten (20) der Längs-Profil-Elemente (12, 14) jeweils einen horizontalen Abschnitt (22) umfassen, gefolgt von einem nach unten geneigten End-Abschnitt (24) am hinteren Ende des Fahrzeugs, **dadurch gekennzeichnet, dass** die oberen Wangen (26) an ihren hinteren Enden (28) an einem Punkt ausgeschnitten oder abgeschnitten sind, der noch vor dem Übergang (30) von dem horizontalen Abschnitt (22) zu dem nach unten geneigten End-Abschnitt (24) angeordnet ist, und dass die Längs-Profil-Elemente (12, 14) seitlich durch Verstärkungs-Profile (32, 34) verstärkt sind, die an den äußeren Seiten der Längs-Profil-Elemente (12, 14) angeflanscht sind und sich entlang ihrer oberen Ränder in Richtung auf das hintere Ende des Fahrzeugs erstrecken,
worin die Längs-Profil-Elemente (12, 14) an dem hinteren Ende des Fahrzeugs verbunden sind über ein Querträger-Element (48), das zwischen den hinteren Enden der Längs-Profil-Elemente (12, 14) eingesetzt ist und in Form von Winkel-Profilen mit einer vertikalen Rippe (50) und einer oberen Wange (52) versehen ist, wobei das Querträger-Element (48) und die rückseitigen Enden (28) der oberen Wangen (26) der Längs-Profil-Elemente (12, 14) einen ausgeschnittenen Teil (56) zwischen den Längs-Profil-Elementen (12, 14) begrenzen.

2. Rahmen-Struktur nach Anspruch 1, **dadurch gekennzeichnet, dass** die oberen Wangen (26) vor dem Übergang (30) von dem horizontalen Abschnitt (22) zu dem geneigten End-Abschnitt (24) enden, so dass sie in dem End-Abschnitt (24) nicht vorhanden sind.

3. Rahmen-Struktur nach einem der Ansprüche 1 oder 2, **dadurch gekennzeichnet, dass** die Verstärkungs-Profile (32, 34) mit einem L-förmigen Querschnitt versehen sind.

4. Rahmen-Struktur nach einem der vorangehenden Ansprüche, **dadurch gekennzeichnet, dass** die Längs-Profil-Elemente (12, 14) eine untere Wange (18) umfassen, die sich zu der inneren Seite des Rahmens (10) erstreckt und die Längs-Profil-Elemente (12, 14) wenigstens an dem Übergang (30) von dem horizontalen Abschnitt (22) zu dem End-Abschnitt (24) verstärkt.

## Revendications

1. Structure de cadre (11) d'un véhicule tracteur, comprenant une paire d'éléments profilés oblongs (12, 14) délimitant le cadre (10) latéralement et s'étendant vers l'extrémité arrière du véhicule, espacés l'un de l'autre, lesdits éléments profilés longitudinaux (12, 14) comprenant chacun une bande verticale (16) et une bride supérieure (26) s'étendant de la bande (16) vers l'intérieur du cadre (10), les côtés supérieurs (20) des éléments profilés longitudinaux (12, 14) comprenant chacun une section horizontale (22), suivie d'une section d'extrémité déclinée vers le bas (24) à l'extrémité arrière du véhicule, **caractérisée en ce que** les brides supérieures (26) sont découpées ou coupées à leurs extrémités arrières (28) à un point situé toujours devant la transition (30) de la section horizontale (22) à la section d'extrémité inclinée vers le bas (24), et **en ce que** les éléments profilés longitudinaux (12, 14) sont renforcés latéralement par des profilés de renforcement (32, 34) qui sont bridés vers les côtés extérieurs des éléments profilés longitudinaux (12, 14) et s'étendent le long de leurs bords supérieurs vers l'extrémité arrière du véhicule,
où les éléments profilés longitudinaux (12, 14) sont connectés à l'extrémité arrière du véhicule par un élément de traverse (48) inséré entre les extrémités arrières des éléments profilés longitudinaux (12, 14) et étant réalisés comme des profilés angulaires avec une bande verticale (50) et une bride supérieure (52), l'élément de traverse (48) et les extrémités arrières (28) des brides supérieures (26) des éléments profilés longitudinaux (12, 14) délimitant une portion découpée (56) entre les éléments profilés longitudinaux (12, 14).

2. Structure de cadre selon la revendication 1, **caractérisée en ce que** les brides supérieures (26) se terminent avant la transition (30) de la section horizontale (22) à la section d'extrémité déclinée (24) de sorte qu'elles ne sont pas présentes dans la section d'extrémité (24).

3. Structure de cadre selon l'une des revendications 1 ou 2, **caractérisée en ce que** les profilés de renforcement (32, 34) sont réalisés avec une section transversale en forme de L.

4. Structure de cadre selon l'une des revendications précédentes, **caractérisée en ce que** les éléments profilés longitudinaux (12, 14) comprennent une bride inférieure (18) s'étendant vers le côté intérieur du cadre (10), renforçant les éléments profilés longitudinaux (12, 14) au moins à la transition (30) de la section horizontale (22) à la section d'extrémité (24).
